(19)

**Europäisches Patentamt**

**European Patent Office**

**Office européen des brevets**

(11) **EP 2 573 600 A1**

(12) **EUROPEAN PATENT APPLICATION**

(43) Date of publication:
27.03.2013 Bulletin 2013/13

(51) Int Cl.:
*G02B 6/293* (2006.01)   *G01C 19/72* (2006.01)

(21) Application number: 12175476.6

(22) Date of filing: 09.07.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 21.09.2011 US 201113239145

(71) Applicant: Honeywell International Inc.
Morristown, NJ 07962-2245 (US)

(72) Inventor: Feth, John
Morristown, NJ New Jersey 07962-2245 (US)

(74) Representative: Houghton, Mark Phillip
Patent Outsourcing Limited
1 King Street
Bakewell, Derbyshire DE45 1DZ (GB)

(54) **Systems and methods for a hollow core optical fiber resonant filter**

(57)     Systems and methods for a hollow core resonant filter are provided. In one embodiment, a hollow-core fiber resonant cavity (100) comprises: a hollow-core fiber (110) having a first and second ends (120,122); a first and a second pigtail fiber (130,132) each of solid core fiber material. A tip (131) of the first pigtail is optically aligned with the first-end to couple light from the first pigtail to the hollow core fiber across a first free-space gap (125). A tip (133) of the second pigtail is optically aligned with the second-end to couple light from the second pigtail to the hollow-core fiber across a second free-space gap (125). The tip (133) of the second pigtail is coated (142) to reflect light received from the second-end back across the second free-space gap into the second-end. The tip of the first pigtail is coated (140) to reflect light received from the first-end back across the first free-space gap into the first-end.

FIG. 1

**Description**

**GOVERNMENT RIGHTS**

This invention was made with Government support under HR0011-08-C-0019 awarded by DARPA. The Government may have certain rights in the invention.

**BACKGROUND**

The accuracy of a rotation rate signal from a resonant fiber optic gyro (RFOG) is at least partially a function of the quality of the light in the gyro resonant cavity. Light from a typical laser source used in an RFOG has a narrow bandwidth and contains both phase noise and intensity noise. It is advantageous to remove the phase from the light before it enters the RFOG resonant cavity. One way to remove the phase noise is to form a resonant cavity by applying a high reflection optical coating to both ends of a segment of solid core single mode fiber. The length of fiber and the coating transmission can be chosen to remove the phase noise from the laser output over a designed bandwidth and decrease the random intensity noise (RIN) in the RFOG rate signal. This technique works well, but to increase gyro rate sensitivity it is advantageous to increase the intensity of the gyro signal by increasing the intensity provided by the laser. Since the light circulating in the resonant filter is much more intense than the input or output of the filter, the circulating intensity in the resonant filter can easily be large enough to create stimulated Brillouin scattering (SBS) in the glass comprising a solid core resonant filter. SBS can irregularly change light frequency by 10 GHz or more over a very short time span which corrupts the resonant filter output and prevents the desired elimination of phase noise. Hollow core fiber, comprising a solid glass cylinder enfolding a honeycomb photonic structure of ∼ 99% air and 1% glass, carries almost all of the light in the air filled core. Air has a much higher SBS threshold than solid core fiber and the honeycomb photonic structure is well suited to use in a high power resonant filter. However, an effective high reflection optical coating cannot be applied to the fiber end of hollow core fiber for lack of a contiguous surface across the hollow core fiber end face. Complex arrangements of fiber tips, lenses, and etalons can be made to create a hollow core resonant filter. However, with three degrees of freedom for each fiber tip, lens, and etalon, the resonant filter requires optimizing 24 degrees of freedom to obtain an operational resonant filter.

For the reasons stated above and for other reasons stated below which will become apparent to those skilled in the art upon reading and understanding the specification, there is a need in the art for systems and methods for a hollow core fiber resonant filter.

**SUMMARY**

The embodiments of the present invention provide methods and systems for a hollow core fiber resonant filter will be understood by reading and studying the following specification.

Systems and methods for a hollow core resonant filter are provided. In one embodiment, a hollow core fiber resonant cavity comprises: a hollow core fiber having a first end and a second end; a first pigtail fiber of solid core fiber material; a second pigtail fiber of solid core fiber material a fiber tip of the first pigtail fiber is optically aligned with the first end of the hollow core fiber to couple light from the first pigtail fiber to the hollow core fiber across a first free-space gap a fiber tip of the second pigtail fiber is optically aligned with the second end of the hollow core fiber to couple light from the second pigtail fiber to the hollow core fiber across a second free-space gap the fiber tip of the second pigtail fiber is coated to reflect light received from the second end of the hollow core fiber back across the second free-space gap into the second end of the hollow core fiber and, the fiber tip of the first solid core fiber is coated to reflect light received from the first end of the hollow core fiber back across the first free-space gap into the first end of the hollow core fiber.

**DRAWINGS**

Embodiments of the present invention can be more easily understood and further advantages and uses thereof more readily apparent, when considered in view of the description of the preferred embodiments and the following figures in which:

Figure 1 is a block diagram of a hollow core fiber resonant cavity of one embodiment of the present invention;

Figures 2A and 2B are charts illustrating Mode Field Radius and Solid Core Fiber SBS Threshold;

Figures 3A, 3B, 3C, 3D and 3E illustrate a Fiber Alignment Bench of one embodiment of the present invention;

Figure 4 illustrates a resonant fiber optic gyroscope of one embodiment of the present invention; and

Figure 5 illustrates a method of one embodiment of the present invention.

In accordance with common practice, the various described features are not drawn to scale but are drawn to emphasize features relevant to the present invention. Reference characters denote like elements throughout figures and text.

**DETAILED DESCRIPTION**

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is therefore not to be taken in a limiting sense.

Embodiments of the present invention provide for a hollow core fiber resonant cavity wherein the mirrored portions of the cavity are decoupled from the fiber forming the resonant cavity. Instead, reflective surfaces (i.e. mirrors having desired transmission and reflection characteristics) are placed on the input and output fiber tips of solid core fibers that feed and reflect light into a length of hollow core fiber. This allows hollow core fiber, which will not accept a mirrored coating, to be used to form a fiber resonant cavity. Assembly requires alignment of only four optical elements, the fiber tips, each with only one degree of freedom, $\pm z$. Embodiments of the present invention further provide for a silicon fiber alignment bench for optically coupling and aligning the mirrored solid core fibers with the hollow core fiber.

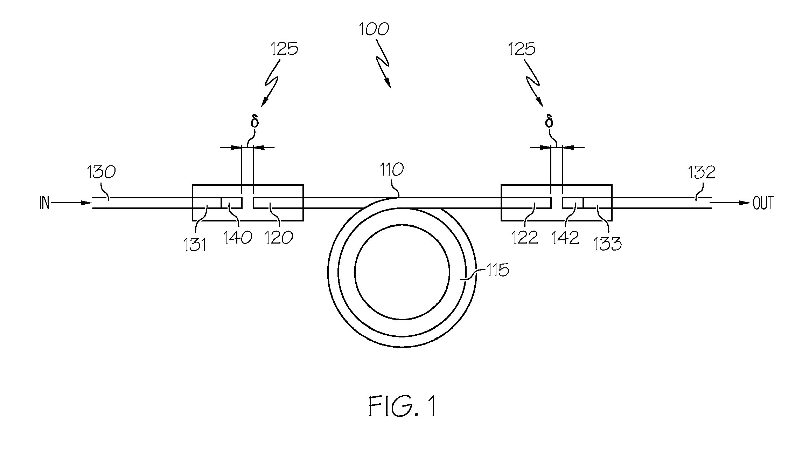

Figure 1 is a diagram illustrating generally at 100 a hollow core fiber resonant cavity apparatus of one embodiment of the present invention. The hollow core fiber resonant cavity 100 comprises a hollow core fiber 110 of length *l* and having an input end 120 and output end 122. In one embodiment, hollow core fiber 110 is coiled around a PZT 115. Hollow core fiber resonant cavity 100 further comprises an first pigtail fiber 130 and a second pigtail fiber 132 both comprising lengths of solid core fiber material. In one embodiment, input fiber 130 and output fiber 132 are both lengths of polarization maintaining (PM) fiber. The solid core fiber tips (shown at 131 and 133) of input fiber 130 and output fiber 132 are aligned adjacent to the input end 120 and output end 122 of hollow core fiber 110, respectively. Faces of fiber tips 131 and 133 are each coated with a low transmission coating (shown at 140 and 142). That is, coatings 140 and 142 effectively function as mirrors. With this configuration, hollow core fiber 110, together with the coated solid core fiber tips 131 and 133, forms a resonant cavity from the hollow core fiber 110 between high reflection coatings on the input and output tips of the solid core pigtail fibers 130 and 131.

In one embodiment in operation, light 170 (from a light source such as a laser diode for example) enters the hollow core fiber resonant cavity 100 from the first pigtail fiber 130 and passes through low transmission coating 140 into hollow core fiber 110. At low transmission coating 142, only a small percentage of the received light exits through the second pigtail fiber 132. The balance of the light is reflected back into hollow core fiber 110 by low transmission coating 142. Once that reflected light reaches low transmission coating 140, only a small percentage of the light is transmitted back to the first pigtail fiber 130. The balance of the light is again reflected back into the first end 120 of hollow core fiber 110 in addition to the light 170 still entering from the light source. The resonant cavity thus functions from coatings 140 and 142 repeatedly reflecting, and then re-reflecting light, between ends 120 and 122 of hollow core fiber 110. In one embodiment in operation, light may enter the cavity 100 from either pigtail fiber 130 or 132 to form a resonant cavity filter. In alternate embodiments in operation, light may enter cavity 100 from both pigtail fiber 130 and 132 at the same time thus forming two independent resonant filter cavities.

Considerations for selecting materials to create the low transmission coatings 140 and 142 include the length of hollow core fiber 110 and its refractive index and the desired transmission of the hollow core fiber resonant cavity 100 as a whole for a particular bandwidth of light that is to be resonant in the cavity 100.

In the configuration illustrated in Figure 1, the solid core fiber tips 131 and 133 are each positioned a distance δ from the respective ends 120 and 122 of hollow core fiber 110. The distance δ places the tips 131 and 133 within the Rayleigh range of the hollow core fiber ends 120 and 133 for efficient coupling of light into the hollow core fiber cavity 110. Light diffracts upon exit from any fiber into free space causing the mode field diameter beam of the beam to expand. With the aid of the Rayleigh range $z_r$ and the mode field radius, $\omega_0$, and light of wavelength λ exiting a length of fiber, the mode field radius at any distance from the exit $\omega(\delta)$ is found from the mode field radius at the $1/e^2$ intensity radius at the exit,

$\omega_0 = \omega(0)$, from the relationships:

$$\omega(\delta) = \omega(0) \cdot \sqrt{1 + \left(\frac{\delta}{z_r}\right)^2}$$

$$z_r = \frac{\pi \cdot \omega_0^2}{\lambda}$$

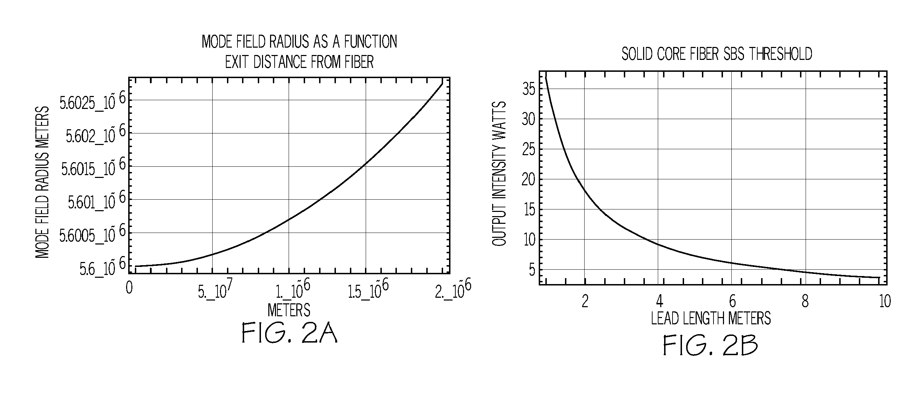

and as illustrated in Figure 2A. Ideally, the separation between the fibers is $\delta \sim 0$. However, even with $\delta = 0.25\mu$, and a nominal $5.6\mu$ mode field radius, light exiting the hollow core fiber in the resonant mode travels a $2\delta$ round trip back into the hollow core fiber expanding the mode field radius to only $5.600170\mu$ for re-entry into the hollow core fiber. A calculation of the nominal loss due to the increase in mode field radius using overlap integrals, and normalizing the difference of initial and re-captured powers to the initial power shows a loss of only 14 ppm. Another useful attribute of this approach is that the coatings 140, 142 may be applied to short segments of PM fiber to form pigtail fibers 130 and 132, which are then attached to leads of other devices (such as a light source or optical detector leads) with a low loss splice as there is a negligible performance penalty for splices outside of the fiber resonant cavity 100.

If a gap 125 between the solid and hollow core fibers is considered a parasitic resonator, it is clear that when $\delta < \lambda/2$, the parasitic cavity will not support a resonant mode.

The plot shown in Figure 2B shows that the PM fiber input and output leads of reasonable length can easily be operated under the SBS threshold for virtually any laser output power used to excite the hollow core fiber resonant filter. Since the output of the resonator is always less than the input, the output solid core fiber also operates under the SBS threshold.

Implementation of resonant cavity 100 benefits from stable self centering mechanical fixtures for mechanical alignment between solid core fiber tips 131 and 133 and hollow core fiber ends 120 and 122. One such structure is a V-groove etched in silicon. Silicon V-grooves provide adequate alignment for like diameter solid and hollow core fibers. Accommodation of dissimilar diameter fibers are made with juxtaposed dissimilar V-grooves. That is, core-to-core alignment of dissimilar diameter fibers can be accomplished by modifying V-groove widths. In the embodiment shown in Figure 1, this alignment is achieved at each end of hollow core fiber 110 by a fiber alignment bench 150.

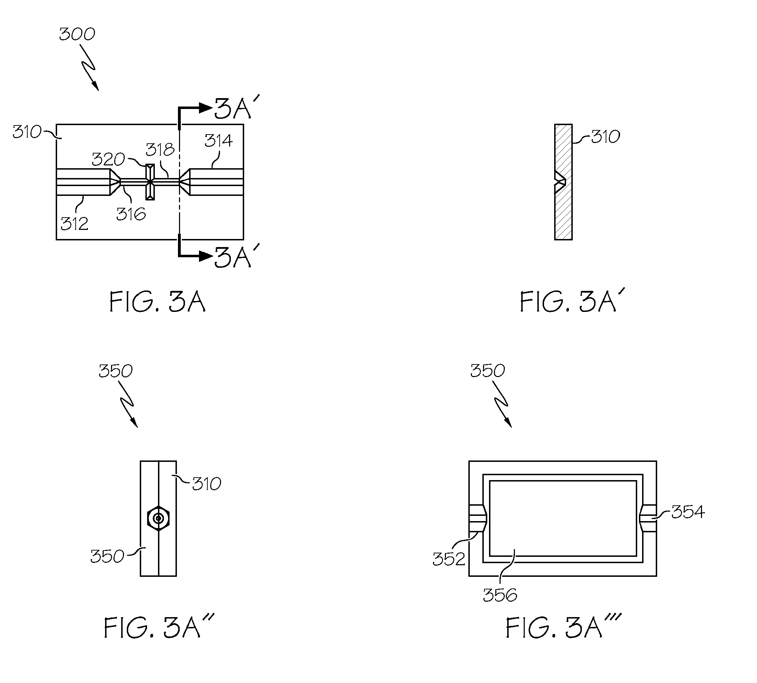

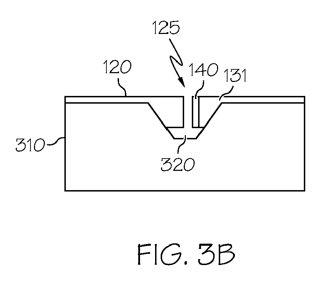

Figures 3A, 3B, 3C, 3D and 3F are diagrams illustrating a fiber alignment bench 300 constructed from an etched silicon crystal substrate 310 for use as a fiber alignment bench 150 for resonant cavity 100. For the silicon crystal 310, the width of the etched V-groove is calculated from the diameters of the hollow core and solid core fibers using,

$$x_1 = 2 \cdot \frac{r_1 + y \cos\theta}{\sin\theta} \text{ and } x_2 = 2 \cdot \frac{r_2 + y \cos\theta}{\sin\theta},$$

where $y$ is the design depth of the center of the respective fiber cores, $r_1$ and $r_2$ are the fiber radii of the respective fibers and $x_1$ and $x_2$ are the respective surface widths of the silicon V-grooves and $\theta = 35.3°$ is the complement of the 54.7° angle between the un-etched silicon surface and the etched groove wall.

The large V-grooves 312 and 314 etched into substrate 310 accommodates the jacketed fibers while the smaller V-grooves 316 and 318 joining the larger V-grooves 312 and 314 accommodate the two fibers cores to be coupled-the hollow core fiber and the solid core fiber, with jackets stripped off. The fibers are held in place using an adhesive applied as a liquid which hardens to fix the fibers in their respective V-grooves with cores aligned and a distance apart (i.e., $\delta$ as shown in Figure 1) within the Rayleigh range. For example, in one implementation utilizing fiber alignment bench 300 in hollow core fiber resonant cavity 100, the jacketed first pigtail fiber 130 would be placed within V-groove 312 with the stripped and coated solid core fiber tip 131 placed within V-groove 316. Similarly, a portion of the jacketed hollow core fiber 110 would be placed in V-groove 314 with the stripped end 120 positioned within V-groove 318. Solid core fiber tip 131 and stripped end 120 could then be precision aligned (using a microscope for example) to be a distance $\delta$ from each other within the Rayleigh range. An adhesive is then applied to each fiber so that alignment is maintained.

The fiber alignment bench 300 further comprises a cross-cut V-grove 320 which traverses across V-grooves 316 and 318 where solid core fiber tip 131 and stripped end 120 meet. As detailed in Figure 3E, the etched cross-cut V-grove 320 at this position within silicon crystal substrate 310 will remove support, leaving fiber tip 131 and stripped end 120 cantilevered at the coupling point. This defeats adhesive wicking to cover, or partially cover the fiber tips during fabrication. That is, cross-cut V-grove 320 disrupts capillary action from pulling the adhesive applied to solid core fiber tip 131 and stripped end 120 into gap 125.

In Figures 3C and 3D, a fiber alignment bench cover 350 is illustrated which, in one embodiment, forms part of fiber alignment bench 300. Fiber alignment bench cover 350 serves to keep dust and condensate out of gap 125 to prevent obstruction of optical coupling between the two installed fiber lengths. In one embodiment, fiber alignment bench cover 350 comprises a set of V-grooves 352 and 354 sized to accommodate the jacket fibers held by V-grooves 312 and 314, and a cavity 356 such that when fiber alignment bench cover 350 is sealed onto substrate 310 (shown in Figure 3C), the alignment of fibers within fiber alignment bench 300 is not disturbed.

In one embodiment, solid core fiber tip 133 and end 122 would be coupled together in the exact same manner as described above using a second implementation of a fiber alignment bench 300. Although fiber alignment bench 300 has been described above in conjunction with forming a hollow core fiber resonant cavity by coupling solid and hollow core fiber, one of ordinary skill in the art who has studied this disclosure would appreciate that in other embodiments, fiber alignment bench 300 would be useful to couple together two solid core fiber filters, or two hollow core fiber filter, as well.

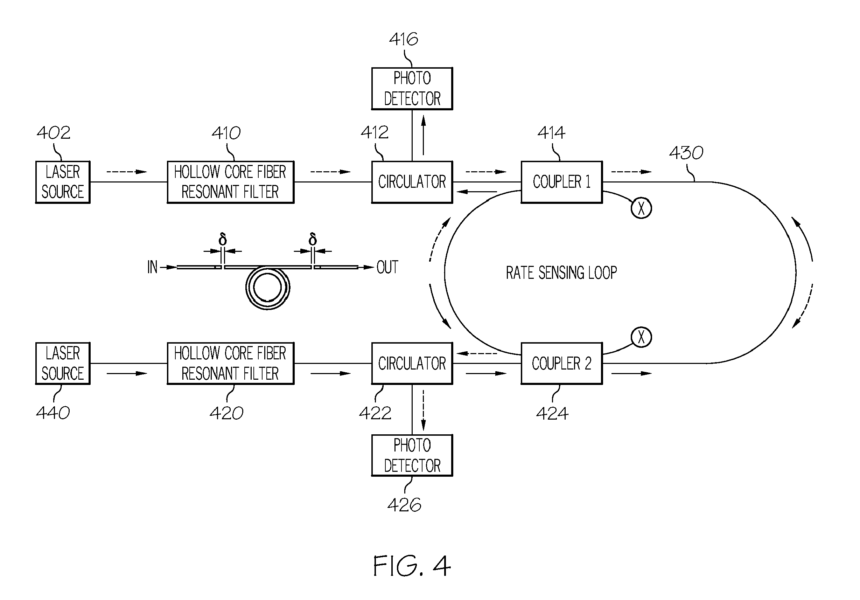

Figure 4 illustrates a diagram of one embodiment of the present invention of a resonant fiber optic gyroscope 400 which comprises two implementations of a hollow core fiber resonant cavity 100 such as described above in Figure 1. These are shown in Figure 4 as hollow core fiber resonant filter 410 and hollow core fiber resonant filter 420. One of ordinary skill in the art after studying this disclosure would appreciate the Figure 4 is a simplified diagram of a resonant fiber optic gyroscope for the purposes of showing how a hollow core fiber resonant cavity could be integrated into such a device. As such, other components, such as intensity modulators, which would be known to those of ordinary skill in the art, are omitted from this diagram for simplicity.

In Figure 4, a first laser source 402 feeds light into the first hollow core fiber resonant filter 410, which forms a resonant cavity as described above. The light from first laser source 402 then proceeds through a first circulator 412 and into a rotation rate sensing loop 430 via a coupler 414. This light traverses the rotation rate sensing loop 430 and exits through a second circulator 422 into a photo-detector 426 designated as the "clockwise photo-detector", from which the time varying intensity fluctuations are measured and reduced to a rotation rate.

A second laser source 404 feeds light into the second hollow core fiber resonant filter 420, which also forms a resonant cavity as described above. The light from second laser source 404 then proceeds through the second circulator 422 and into the rotation rate sensing loop 430 via a coupler 424. This light traverses the rotation rate sensing loop 430 and exits through the first circulator 412 into a photo-detector 416 designated as the "counterclockwise photo-detector", from which the time varying intensity fluctuations are also measured and reduced to a rotation rate.

In this embodiment, hollow core fiber resonant filter 410 and 420 each function to eliminate phase noise in the light from the respective lasers. Further, because hollow core fiber Resonant filter 410 and 420 utilize hollow cores rather that solid cores, the optical signal intensity of the outputs of laser sources 402 and 404 can be set higher than those for prior art resonant fiber optic gyroscope that utilize solid core resonant filter without producing parasitic effects as light intensity increases. As such, inclusion of hollow core fiber resonant filters 410 and 420 serve to increase the accuracy of rotation rate measurements from resonant fiber optic gyroscope 400.

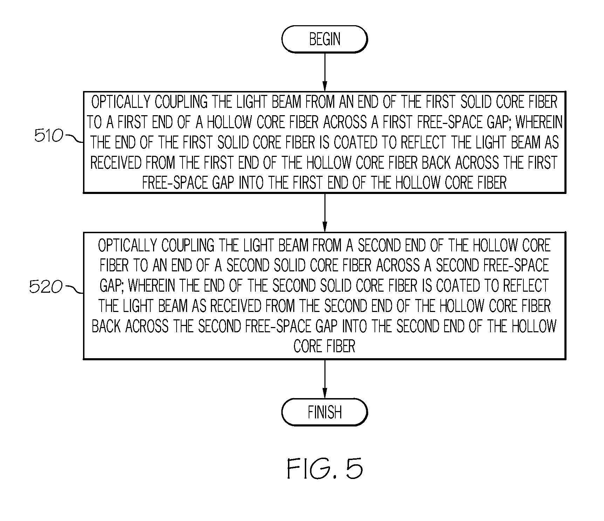

Figure 5 is a method of one embodiment of the present invention for a hollow core resonant filter. In alternate embodiments, the method describe with respect to Figure 5 applies and can be combined in whole or in part with the embodiments described above with respect to Figures 1-4. The method begins at 500 with transmitting a light beam through a first solid core fiber. The method proceeds to 510 with optically coupling the light beam from an end of the first solid core fiber to a first end of a hollow core fiber across a first free-space gap. The end of the first solid core fiber is coated to reflect the light beam as received from the first end of the hollow core fiber back across the first free-space gap into the first end of the hollow core fiber. The method proceeds to 520 with optically coupling the light beam from a second end of the hollow core fiber to an end of a second solid core fiber across a second free-space gap. The end of the second solid core fiber is coated to reflect the light beam as received from the second end of the hollow core fiber back across the second free-space gap into the second end of the hollow core fiber.

The solid core fiber tips of the solid core fibers are aligned adjacent to the first and second ends of the hollow core fiber, respectively. Faces of fiber tips 131 and 133 are each coated with a low transmission coating (shown at 140 and 142). Coatings applied to the faces of the solid core fiber tips effectively function as mirrors to reflect light back in to the hollow core fiber. With this configuration, the hollow core fiber together with the coated solid core fiber tips forms a resonant cavity from the hollow core fiber between high reflection coatings on the input and output tips of the solid core pigtail fibers. For example, in one embodiment, light (from a light source such as a laser diode for example) enters the hollow core fiber resonant cavity from the first solid core fiber and passes through a low transmission coating into the hollow core fiber. Upon reaching the low transmission coating on the second solid core fiber, only a small percentage of the light exits through the second solid core. The balance is reflected back into the hollow core fiber. Upon that light again traversing through the hollow core fiber and impinging on the low transmission coating applied to the first solid core fiber, only a small percentage of the light is transmitted back to the first solid core fiber, and the balance is again reflected back into the first end of the hollow core fiber where it is added to the light entering from the light source. The resonant cavity thus functions from the high reflective, low transmission coatings on the tips of the solid core fibers repeatedly reflecting, and then re-reflecting light, between the two ends the hollow core fiber. As mentioned above, in one embodiment, the first and second free-space gaps provide a distance between the solid and hollow core fibers that is less that the Rayleigh range. Further in one embodiment, alignment of the solid and hollow core fibers is achieved through a fiber alignment bench such as described above with respect to Figure 1 and 3A-B.

**EXAMPLE EMBODIMENTS**

Example 1 includes A method for a hollow core resonant filter, the method comprising transmitting a light beam through a first solid core fiber; optically coupling the light beam from an end of the first solid core fiber to a first end of a hollow core fiber across a first free-space gap; optically coupling the light beam from a second end of the hollow core fiber to an end of a second solid core fiber across a second free-space gap; wherein the end of the second solid core fiber is coated to reflect the light beam as received from the second end of the hollow core fiber back across the second free-space gap into the second end of the hollow core fiber; and wherein the end of the first solid core fiber is coated to reflect the light beam as received from the first end of the hollow core fiber back across the first free-space gap into the first end of the hollow core fiber.

Example 2 includes the method of Example 1, wherein the end of the first solid core fiber and the first end of the hollow core fiber are separated by the first free-space gap by a distance, $\delta$, that is less that the Rayleigh range.

Example 3 includes the method of any of Examples 1-2, wherein the end of the second solid core fiber and the second end of the hollow core fiber are separated by the second free-space gap by a distance, $\delta$, that is less that the Rayleigh range.

Example 4 includes the method of any of Examples 1-3, further comprising, aligning the first solid core fiber and the first end of the hollow core fiber by securing the first solid core fiber within a first V-groove of a fiber alignment bench and securing the first end of the hollow core fiber within a second V-groove of the fiber alignment bench; wherein the fiber alignment bench is formed from a silicon crystal material.

Example 5 includes the method of Example 4, wherein the fiber alignment bench includes a cross-cut V-groove at a coupling point between the first solid core fiber and the first end of the hollow core fiber that removes support such that a portion of the first solid core fiber and a portion of the end of the hollow core fiber are cantilevered at the coupling point.

Example 6 includes a hollow core fiber resonant cavity, the resonant cavity comprising a hollow core fiber having a first end and a second end; a first pigtail fiber of solid core fiber material; a second pigtail fiber of solid core fiber material; wherein a fiber tip of the first pigtail fiber is optically aligned with the first end of the hollow core fiber to couple light from the first pigtail fiber to the hollow core fiber across a first free-space gap; wherein a fiber tip of the second pigtail fiber is optically aligned with the second end of the hollow core fiber to couple light from the second pigtail fiber to the hollow core fiber across a second free-space gap; wherein the fiber tip of the second pigtail fiber is coated to reflect light received from the second end of the hollow core fiber back across the second free-space gap into the second end of the hollow core fiber; and wherein the fiber tip of the first pigtail fiber is coated to reflect light received from the first end of the hollow core fiber back across the first free-space gap into the first end of the hollow core fiber.

Example 7 includes the resonant cavity of Example 6, wherein one or both of the first pigtail fiber and the second pigtail fiber include lengths of polarization maintaining fiber.

Example 8 includes the resonant cavity of any of Examples 6-7, further comprising a first fiber alignment bench of silicon material securing the fiber tip of the first pigtail fiber within a first V-groove and the first end of the hollow core fiber within a second V-groove.

Example 9 includes the resonant cavity of Example 8, the first fiber alignment bench further comprising a cross-cut V-groove at a coupling point between the fiber tip of the first pigtail fiber and the first end of the hollow core fiber such that a portion of the first solid core fiber and a portion of the end of the hollow core fiber are cantilevered at the coupling point.

Example 10 includes the resonant cavity of any of Examples 6-9, wherein the fiber tip of the first pigtail fiber and the first end of the hollow core fiber are separated by the first free-space gap by a distance, $\delta$, that is less that the Rayleigh range.

Example 11 includes the resonant cavity of any of Examples 6-10, wherein the fiber tip of the second pigtail fiber and the second end of the hollow core fiber are separated by the second free-space gap by a distance, $\delta$, that is less that the Rayleigh range.

Example 12 includes the resonant cavity of any of Examples 6-11, wherein a first coating applied to the fiber tip of the first pigtail fiber and a second coating applied to the fiber tip of the second pigtail fiber each have transmission and reflection properties such that a bandwidth of light entering the first pigtail will resonate within the hollow core fiber.

Example 13 includes a resonant fiber optic gyroscope, the gyroscope comprising a first laser source; a first hollow core fiber resonant cavity filter having an input end and an output end, wherein the first end of the first hollow core fiber resonant cavity filter is coupled to the first laser source; a rotation rate sensing loop having a first end and a second end; a first circulator coupled to the output end of the first hollow core fiber resonant cavity filter, a first photo-detector, and the first end of the rotation rate sensing loop, wherein the first circulator passes light received from the first hollow core fiber resonant cavity filter to the first end of rotation rate sensing loop, and light received from the first end of the rotation rate sensing loop to the first photo-detector; a second laser source; a second hollow core fiber resonant cavity filter having an input end and an output end, wherein the first end of the second hollow core fiber resonant cavity filter is an input coupled to the second laser source; a second circulator couple to the output end of the second hollow core fiber resonant cavity filter, a second photo-detector, and the second end of the rotation rate sensing loop, wherein the second circulator passes light received from the second hollow core fiber resonant cavity filter to the second end of the rotation rate sensing loop, and light received from the second end of the rotation rate sensing loop to the second photo-detector; wherein the first hollow core fiber resonant cavity filter and the second hollow core fiber resonant cavity filter each comprise: a hollow core fiber having a first end and a second end; a first pigtail fiber of solid core fiber material; a second pigtail fiber of solid core fiber material; wherein a fiber tip of the first pigtail fiber is optically aligned with the first end of the hollow core fiber to couple light from the first pigtail fiber to the hollow core fiber across a first free-space gap; wherein a fiber tip of the second pigtail fiber is optically aligned with the second end of the hollow core fiber to couple light from the second pigtail fiber to the hollow core fiber across a second free-space gap; wherein the fiber tip of the second pigtail fiber is coated to reflect light received from the second end of the hollow core fiber back across the second free-space gap into the second end of the hollow core fiber; and wherein the fiber tip of the first pigtail fiber is coated to reflect light received from the first end of the hollow core fiber back across the first free-space gap into the first end of the hollow core fiber.

Example 14 includes the gyroscope of Example 13, wherein one or both of the first pigtail fiber and the second pigtail fiber include lengths of polarization maintaining fiber.

Example 15 includes the gyroscope of any of Examples 13-14, wherein the first hollow core fiber resonant cavity filter and the second hollow core fiber resonant cavity filter each further comprise a first fiber alignment bench of silicon material securing the fiber tip of the first pigtail fiber within a first V-groove and the first end of the hollow core fiber within a second V-groove; and a second fiber alignment bench of silicon material securing the fiber tip of the second pigtail fiber within a third V-groove and the second end of the hollow core fiber within a fourth V-groove.

Example 16 includes the gyroscope of Example 15, the first fiber alignment bench and second fiber alignment bench each further comprising a cross-cut V-groove.

Example 17 includes the gyroscope of any of Examples 13-16, wherein the fiber tip of the first pigtail fiber and the first end of the hollow core fiber are separated by the first free-space gap by a distance, $\delta$, that is less that the Rayleigh range.

Example 18 includes the gyroscope of any of Examples 13-17, wherein the fiber tip of the second pigtail fiber and the second end of the hollow core fiber are separated by the second free-space gap by a distance, $\delta$, that is less that the Rayleigh range.

Example 19 includes the gyroscope of any of Examples 13-18, wherein a first coating applied to the fiber tip of the first pigtail fiber and a second coating applied to the fiber tip of the second pigtail fiber each have transmission and reflection properties such that a bandwidth of light entering the first pigtail will resonate within the hollow core fiber.

Example 20 includes the gyroscope of any of Examples 13-20, wherein the first photo-detector measures time varying intensity fluctuations for light travelling counterclockwise through the rotation rate sensing loop and the second photo-detector measures time varying intensity fluctuation for light travelling clock-wise through the rotation rate sensing loop.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended to cover any adaptations or variations of the present invention. Therefore, it is manifestly intended that this invention be limited only by the claims and the equivalents thereof.

**Claims**

1. A method for a hollow core resonant filter, the method comprising:

transmitting a light beam through a first solid core fiber 130 ;
optically coupling the light beam from an end 131 of the first solid core fiber 130 to a first end 120 of a hollow core fiber 110 across a first free-space gap 125;
optically coupling the light beam from a second end 122 of the hollow core fiber 110 to an end 133 of a second solid core fiber across a second free-space gap 125;
wherein the end 133 of the second solid core fiber is coated 142 to reflect the light beam as received from the second end 122 of the hollow core fiber 110 back across the second free-space gap 125 into the second end 122 of the hollow core fiber 110; and
wherein the end 131 of the first solid core fiber 130 is coated 140 to reflect the light beam as received from the first end 120 of the hollow core fiber 110 back across the first free-space gap 125 into the first end 120 of the hollow core fiber 110.

**2.** The method of claim 1, wherein the end of the first solid core fiber 130 and the first end 120 of the hollow core fiber 110 are separated by the first free-space gap 125 by a distance, $\delta$, that is less that the Rayleigh range.

**3.** The method of claim 1, wherein the end of the second solid core fiber and the second end 122 of the hollow core fiber 110 are separated by the second free-space gap 125 by a distance, $\delta$, that is less that the Rayleigh range.

**4.** The method of claim 1, further comprising, aligning the first solid core fiber 130 and the first end 120 of the hollow core fiber 110 by securing the first solid core fiber 130 within a first V-groove 312 of a fiber alignment bench 300 and securing the first end 120 of the hollow core fiber 110 within a second V-groove 314 of the fiber alignment bench 300; wherein the fiber alignment bench 300 is formed from a silicon crystal material.

**5.** The method of claim 4, wherein the fiber alignment bench 300 includes a cross-cut V-groove 320 at a coupling point between the first solid core fiber 130 and the first end 120 of the hollow core fiber 110 that removes support such that a portion of the first solid core fiber 130 and a portion of the end of the hollow core fiber 110 are cantilevered at the coupling point.

**6.** A hollow core fiber 110 resonant cavity, the resonant cavity comprising:

a hollow core fiber 110 having a first end 120 and a second end 122;
a first pigtail fiber 130 of solid core fiber material;
a second pigtail fiber 132 of solid core fiber material;
wherein a fiber tip 131 of the first pigtail fiber is optically aligned with the first end 120 of the hollow core fiber 110 to couple light from the first pigtail fiber 130 to the hollow core fiber 110 across a first free-space gap 125;
wherein a fiber tip 133 of the second pigtail fiber is optically aligned with the second end 122 of the hollow core fiber 110 to couple light from the second pigtail fiber to the hollow core fiber 110 across a second free-space gap 125;
wherein the fiber tip 133 of the second pigtail fiber 132 is coated 142 to reflect light received from the second end 122 of the hollow core fiber 110 back across the second free-space gap 125 into the second end 122 of the hollow core fiber 110; and
wherein the fiber tip 131 of the first pigtail fiber 130 is coated 140 to reflect light received from the first end 120 of the hollow core fiber 110 back across the first free-space gap 125 into the first end 120 of the hollow core fiber 110.

**7.** The resonant cavity of claim 6, wherein one or both of the first pigtail fiber 130 and the second pigtail fiber 132 include lengths of polarization maintaining fiber.

**8.** The resonant cavity of claim 6, further comprising a first fiber alignment bench 300 of silicon material securing the fiber tip 131 of the first pigtail fiber 130 within a first V-groove 316 and the first end 120 of the hollow core fiber 110 within a second V-groove 318.

**9.** The resonant cavity of claim 8, the first fiber alignment bench 300 further comprising a cross-cut V-groove 320 at a coupling point between the fiber tip 131 of the first pigtail fiber 130 and the first end 120 of the hollow core fiber 110 such that a portion of the first solid core fiber 130 and a portion of the end of the hollow core fiber 110 are cantilevered at the coupling point.

**10.** The resonant cavity of claim 6, wherein the fiber tip 131 of the first pigtail fiber 130 and the first end 120 of the hollow core fiber 110 are separated by the first free-space gap 125 by a distance, $\delta$, that is less that the Rayleigh range; and wherein the fiber tip of the second pigtail fiber and the second end 122 of the hollow core fiber 110 are separated by the second free-space gap 125 by a distance, $\delta$, that is less that the Rayleigh range.

FIG.1

MODE FIELD RADIUS AS A FUNCTION
EXIT DISTANCE FROM FIBER

FIG. 2A

SOLID CORE FIBER SBS THRESHOLD

FIG. 2B

300

3A′

310

320    318    314

312    316

FIG. 3A

310

FIG. 3A′

350

310

350

FIG. 3A″

350

354

352

356

FIG. 3A‴

EP 2 573 600 A1

FIG. 3B

FIG. 4

EP 2 573 600 A1

BEGIN

510 —

OPTICALLY COUPLING THE LIGHT BEAM FROM AN END OF THE FIRST SOLID CORE FIBER TO A FIRST END OF A HOLLOW CORE FIBER ACROSS A FIRST FREE-SPACE GAP; WHEREIN THE END OF THE FIRST SOLID CORE FIBER IS COATED TO REFLECT THE LIGHT BEAM AS RECEIVED FROM THE FIRST END OF THE HOLLOW CORE FIBER BACK ACROSS THE FIRST FREE-SPACE GAP INTO THE FIRST END OF THE HOLLOW CORE FIBER

520 —

OPTICALLY COUPLING THE LIGHT BEAM FROM A SECOND END OF THE HOLLOW CORE FIBER TO AN END OF A SECOND SOLID CORE FIBER ACROSS A SECOND FREE-SPACE GAP; WHEREIN THE END OF THE SECOND SOLID CORE FIBER IS COATED TO REFLECT THE LIGHT BEAM AS RECEIVED FROM THE SECOND END OF THE HOLLOW CORE FIBER BACK ACROSS THE SECOND FREE-SPACE GAP INTO THE SECOND END OF THE HOLLOW CORE FIBER

FINISH

FIG. 5

Europäisches
Patentamt

European
Patent Office

Office européen
des brevets

# EUROPEAN SEARCH REPORT

**Application Number**

EP 12 17 5476

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARTY P T ET AL: "All-Fiber Multi-Purpose Gas Cells and Their Applications in Spectroscopy", JOURNAL OF LIGHTWAVE TECHNOLOGY, IEEE SERVICE CENTER, NEW YORK, NY, US, vol. 28, no. 8, 15 April 2010 (2010-04-15), pages 1236-1240, XP011304087, ISSN: 0733-8724 * page 1236, right-hand column, last paragraph - page 1237, left-hand column, paragraph 2; figure 1 * | 1-3,6,10 | INV. G02B6/293 G01C19/72 |
| X | DATABASE WPI Week 200925 Thomson Scientific, London, GB; AN 2009-G98847 XP002688910, -& CN 101 387 608 A (UNIV CHONGQING) 18 March 2009 (2009-03-18) * abstract; figure 2 * | 1-4,6-8, 10 | |
| A | DE 39 29 453 C1 (MESSERSCHMITT-BÖLKOW-BLOHM GMBH) 21 March 1991 (1991-03-21) * the whole document * | 1,4-6,8, 9 | TECHNICAL FIELDS SEARCHED (IPC) G02B G01C |
| A | US 2002/085810 A1 (LEE MYUNG-HYUN [KR] ET AL) 4 July 2002 (2002-07-04) * paragraphs [0016], [0017] * * paragraphs [0025] - [0029]; figures 4,5 * | 1,4-6,8, 9 | |

The present search report has been drawn up for all claims

| Place of search | Date of completion of the search | Examiner |
|---|---|---|
| Berlin | 14 December 2012 | Ciarrocca, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 17 5476

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2012

| Patent document cited in search report | Publication date | Patent family member(s) | Publication date |
|---|---|---|---|
| CN 101387608 A | 18-03-2009 | NONE | |
| DE 3929453 C1 | 21-03-1991 | NONE | |
| US 2002085810 A1 | 04-07-2002 | KR 20020058632 A<br>US 2002085810 A1 | 12-07-2002<br>04-07-2002 |

EPO FORM P0459

For more details about this annex : see Official Journal of the European Patent Office, No. 12/82